# EUROPÄISCHE PATENTSCHRIFT

(11) **EP 2 384 953 B1**
(45) Veröffentlichungstag und Bekanntmachung des Hinweises auf die Patenterteilung: **15.01.2014**
(21) Anmeldenummer: 11176511.1
(22) Anmeldetag: 17.11.2008
(51) Int. Cl.: B62D 15/02, B62D 6/00, B62D 5/04

(54) **Vorrichtung und Verfahren zum Überprüfen einer Ausführbarkeit einer vorgegebenen Soll-Fahrtrichtungsgröße für ein Fahrzeug**
Device and method for checking an ability to implement a pre-determined target travel direction parameter for a vehicle
Dispositif et procédé de contrôle vérifiant la possibilité d'exécuter une grandeur de consigne de direction prédéterminée pour un véhicule

(30) Priorität: 27.06.2008 DE 102008002699
(43) Veröffentlichungstag der Anmeldung: 09.11.2011
(62) Teilanmeldung aus: 08874775.3
(73) Patentinhaber: Robert Bosch GmbH, 70442 Stuttgart (DE)
(72) Erfinder: Niemz, Volker, 71277 Rutesheim (DE)

(56) Entgegenhaltungen:
- EP-A- 1 561 673
- EP-A1- 1 867 555
- EP-A2- 1 607 306
- EP-A2- 1 867 557
- DE-A1- 19 902 096
- DE-A1- 19 922 173
- JP-A- 2004 291 853
- JP-A- 2005 096 725
- US-A1- 2006 131 096

## Beschreibung

Die Erfindung betrifft eine Vorrichtung und ein Verfahren zum Steuern einer automatischen Lenkung eines Fahrzeugs. Des Weiteren betrifft die Erfindung eine Vorrichtung und ein Verfahren zum Überprüfen einer Ausführbarkeit einer vorgegebenen Soll-Fahrtrichtungsgröße für ein Fahrzeug.

### Stand der Technik

Es ist bereits bekannt, Fahrzeuge mit einem automatischen Fahrzeugsteuersystem auszustatten. Ein derartiges automatisches Fahrzeugsteuersystem ist beispielsweise ein automatisches Spurhaltesystem oder ein Einparkassistent. Um dem Fahrer das Einparken in eine Parklücke zu erleichtern, ermittelt der Einparkassistent unter Berücksichtigung einer Ausdehnung der Parklücke und einer Lage des Fahrzeugs zu der Parklücke einen vorteilhaften Einparkweg. Beispielsweise besteht der Einparkweg aus einer Aneinanderreihung von Geraden, Kreisabschnitten und Klothoiden. Je nach der Dimensionierung und der Startpositionen können die Kreissegmente verschiedene konstante Lenkwinkelanforderungen bedingen. Die Wahrscheinlichkeit ist sogar sehr hoch, dass die Radien und somit der geforderte Lenkeinschlag stark variieren.

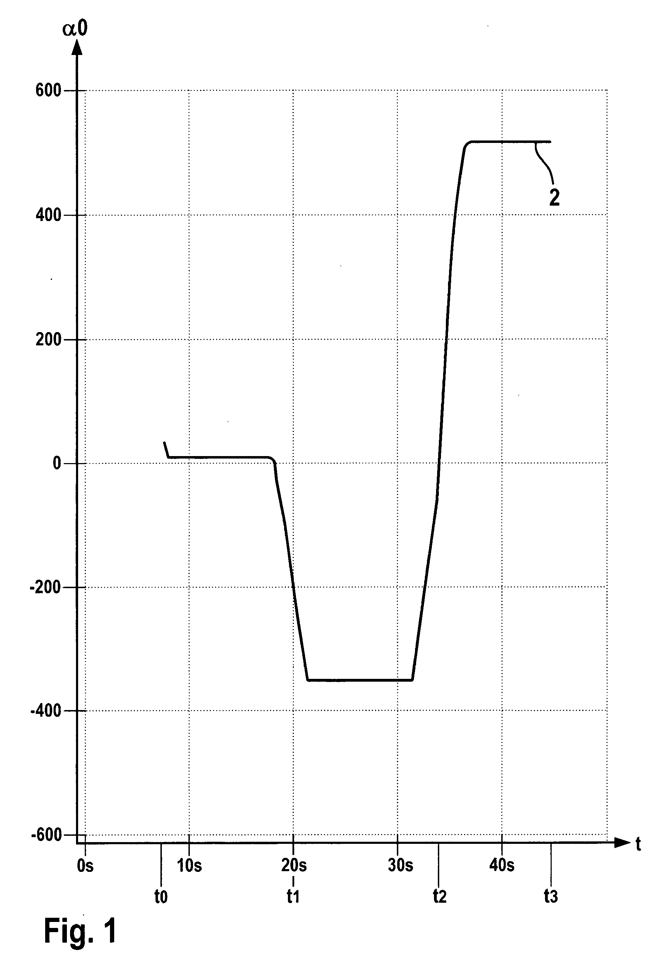

Fig. 1 zeigt ein Koordinatensystem zum Darstellen eines Beispiels für eine von einem Einparkassistenten ermittelte Lenkwinkelanforderung im zeitlichen Verlauf (Graph 2). Die Abszisse des Koordinatensystems ist die Zeitachse t. Die Ordinate gibt die Soll-Lenkradwinkel α0 an, welche zu den entsprechend Zeiten am Lenkrad bzw. am Lenkgestänge eingestellt werden müssen. Der Soll-Lenkradwinkel α0 entspricht dabei einer Lenkradwinkelanforderung.

Zu einem Zeitpunkt t0 wird der Einparkvorgang mit einem Soll-Lenkradwinkel α0 von 0° gestartet. Zu den Zeitpunkten t1 und t2 nimmt der Soll-Lenkradwinkel α0 andere Werte an, wobei das Lenkrad stark eingeschlagen werden soll. Die Bahnplanung des Einparkvorgangs sieht somit zwei Kreisbögen vor, auf welchen der Soll-Lenkradwinkel α0 stets konstant ist. Zum Zeitpunkt t3 ist der Einparkvorgang abgeschlossen. Sofern die bestimmte vorteilhafte Lenkwinkelanforderung eingehalten wird, ist davon auszugehen, dass sich das Fahrzeug zum Zeitpunkt t3 in einer vorteilhaften Stellung in der Parklücke befindet.

Ein ermittelter vorteilhafter Einparkweg, wie beispielsweise der zeitliche Verlauf der Lenkwinkelanforderung der Fig. 1, kann dem Fahrer durch Lenkanweisungen während des Einparkvorgangs mitgeteilt werden. Als Alternative dazu ist auch ein automatisches Ausführen des ermittelten vorteilhaften Einparkweges unter Verwendung eine automatische Lenkradführung möglich. Dabei werden während des Einparkens zu bestimmten Zeitpunkten, welche sich aus dem ermittelten vorteilhaften Einparkweg ergeben, die Soll-Fahrtrichtungen (z.B. Soll-Lenkeinschläge) des vorteilhaften Einparkwegs automatisch eingestellt. Beispielsweise wird zu den Zeitpunkten t0 bis t3 der jeweilige vorgegebene Soll-Lenkradwinkel α0 automatisch eingestellt. Dies erleichtert dem Fahrer das Einparken in die Parklücke zusätzlich.

Eine geeignete automatische Lenkradführung kann beispielsweise durch eine elektronische Lenkung (Electronic Steering Chassis ESC/Electro-mechanic Power-assist Steering EPS) realisiert werden. Allerdings erfordert ein sicheres Einhalten des vorteilhaften Einparkwegs ein relativ genaues Einhalten der vorgegebenen Soll-Fahrtrichtungen. Dies stellt hohe Anforderungen an die elektronische Lenkung.

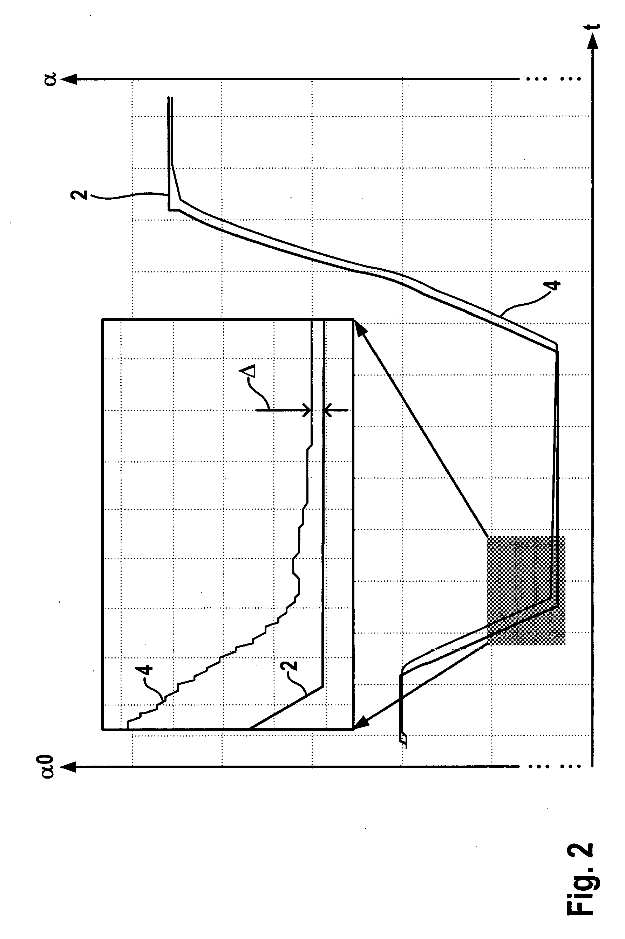

Die bestimmten Soll-Lenkradwinkel α0 können jedoch in der Praxis oft nicht eingehalten werden. Fig. 2 zeigt ein Koordinatensystem zum Darstellen eines Beispiels für ein ungenaues Einhalten der vorgegebenen Soll-Lenkradwinkel α0 der Fig. 1. Die Abszisse und die Ordinate des Koordinatensystems entsprechen, wie oben bei der Fig. 1, der Zeitachse t und den bestimmten Soll-Lenkradwinkeln α0. Die Ordinate gibt auch die ermittelten Ist-Lenkradwinkel α während eines Abfahrens des vorgegebenen Einparkwegs durch ein Fahrzeug mit einer elektronischen Lenkung an. Zur besseren Veranschaulichung ist ein Teilausschnitt der Fig. 2 vergrößert dargestellt.

Der Graph 4 gibt die Ist-Lenkradwinkel α an, welche zu einer Zeit t tatsächlich über die elektrische Lenkung am Lenkrad eingestellt sind. Wie beim Vergleich der Graphen 2 und 4 deutlich wird, werden die von dem Einparkassistenten vorgegebene Soll-Lenkradwinkel α0 durch die elektrische Lenkung nur ungenau eingehalten. Beispielsweise kann der für einen Soll-Lenkradwinkel α0 von 300° eingestellte Ist-Lenkradwinkel α nur 295° betragen. Erfolgt keine Korrektur der Differenz Δ von 5° zwischen dem Soll-Lenkradwinkel α0 und dem Ist-Lenkradwinkel α, so kann dies zu deutlichen Abweichungen beim Abfahren des vorgegebenen Einparkwegs führen.

Zusätzlich ergeben sich besonders für sehr enge Parklücken Einparkwege mit vergleichsweise großen Lenkeinschlägen. Sind diese vergleichsweise großen Lenkeinschläge mit dem Fahrzeug nicht mehr ausführbar, so weicht der gefahrene Einparkweg signifikant von dem ermittelten vorteilhaften Einparkweg ab.

Fehler beim Einstellen der gewünschten Soll-Fahrtrichtung können häufig durch ein Eingreifen des Fahrers nicht mehr korrigiert werden. Dies macht in vielen Fällen einen vorzeitigen Abbruch des Einparkvorgangs erforderlich. Zusätzlich kann das Abweichen des Fahrzeugs von dem ermittelten vorteilhaften Einparkweg zu einer Kollision, beispielsweise mit einem benachbart geparkten Fahrzeug, führen.

Die EP 1 650 103 A2 beschreibt ein Lenksystem für ein Fahrzeug, bei welchem eine Gierrate mit einem Lenkwinkel verglichen wird. Anschließend kann die Fahrtrichtung des Fahrzeugs so korrigiert werden, dass der Lenkwinkel mit der Gierrate übereinstimmt. Allerdings muss das Signal der Gierrate dabei aufgrund des Rauschens des Sensors stark gefiltert werden. Dies führt zu einer zeitlichen Verzögerung. Zusätzlich kann eine verlässliche Gierrate nur bei vergleichsweise großen Geschwindigkeiten ermittelt werden. Des Weiteren erfordert das Ermitteln der möglicherweise vorliegenden Abweichungen zwischen der Gierrate und dem Lenkwinkel und die anschließend ausgeführte Korrektur der Fahrtrichtung relativ viel Zeit.

Aus der DE 199 22 173 A1 ist eine automatische Lenkvorrichtung für ein Fahrzeug bekannt, bei dem ein Ist-Linkwinkel erfasst wird und mit einem ortsabhängig gespeicherten Soll-Lenkwinkel verglichen wird. Überschreitet die Differenz zwischen Soll- und Ist-Lenkwinkel für eine bestimmte Zeitdauer einen vorgegeben Schwellwert, so wird der automatische Lenkvorgang durch ein Steuermittel unterbrochen. Dabei wird zusätzlich die Ortsbewegung des Fahrzeugs erfasst und berücksichtigt.

Der nächstliegende Stand der Technik ist in der DE 199 22 173 A1 zu sehen.

### Offenbarung der Erfindung

Die Erfindung schafft eine Vorrichtung zum Steuern einer automatischen Lenkung eines Fahrzeugs mit den Merkmalen des Anspruchs 1, eine Vorrichtung zum Überprüfen einer Ausführbarkeit einer vorgegebenen Soll-Fahrtrichtungsgröße für ein Fahrzeug mit den Merkmalen des Anspruchs 5, ein Verfahren zum Steuern einer automatischen Lenkung eines Fahrzeugs mit den Merkmalen des Anspruchs 9 und ein Verfahren zum Überprüfen einen Ausführbarkeit einer vorgegebenen SollFahrtrichtungsgröße für ein Fahrzeug mit den Merkmalen des Anspruchs 10.

Die Vorrichtung und das Verfahren zum Steuern einer automatischen Lenkung eines Fahrzeugsi basie ren auf einem Ermitteln einer Differenz zwischen einer geforderten Soll-Fahrtrichtungsgröße und ei ner von der automatischen (elektronischen) Lenkung eingestellten Ist-Fahrtrichtungsgröße. Der Erfindung liegt auch der Gedanke zugrunde, dass eine Kompensation der Differenz (Offset) innerhalb oder vor der Ausführung einer vorgegebenen Fahrtroute, wie eines Einparkwegs, realisierbar ist, indem vor einem Einstellen der gewünschten Soll-Fahrtrichtungsgröße eine korrigierte Soll-Fahrtrichtungsgröße ermittelt wird. Die korrigierte Soll-Fahrtrichtungsgröße wird dabei so gewählt, dass mit hoher Wahrscheinlichkeit ein Fahren des Fahrzeugs in die der gewünschten Soll-Fahrtrichtungsgröße entsprechende Richtung gewährleistet ist. Dabei wird vorzugsweise ein regelmäßig oder bei Bedarf neu festgelegter Korrekturfaktor verwendet.

Die Vorrichtung und das Verfahren bieten eine Kompensation von Offsets, welche während eines semi-autonomen Einparkmanövers durch die im Fahrzeug verbaute elektronische Lenkung verursacht werden können. Somit kann über die Erfindung die Robustheit von semi-autonomen Einparksystemen verbessert werden. Ein selbständiges Anpassen des Systems an die angeschlossene Sensorik und Aktorik ist dabei möglich. Alterungsprozesse oder andere Einflussfaktoren auf die automatische Lenkung oder auf die Übersetzung des Lenkwinkels in eine Stellung der Räder können somit ausgeglichen werden. Die vorliegende Erfindung lässt sich mit geringen Kosten realisieren

Verschiedene Abweichungen können durch eine erfindungsgemäße Vorrichtung und ein erfindungsgemäßes Verfahren ausgeglichen werden. So können Abweichungen in der internen Signalverarbeitung der elektronischen Lenkung dazu führen, dass eine vorgegebene Soll-Fahrtrichtungsgröße, beispielsweise eine Soll-Fahrtrichtung, ein Soll-Lenkradwinkel und/oder ein Soll-Radwinkel, nur ungenau vom Fahrzeug eingehalten werden. So kann herkömmlicherweise ein Soll-Lenkradwinkel häufig nur ungenau am Lenkrad eingestellt werden. Zusätzlich können Alterungsprozesse oder Abnutzungsprozesse an der automatischen Lenkung oder am Fahrwerk zu einem ungenauen Einstellen der vorgegebenen Soll-Fahrtrichtungsgröße führen. Weitere herkömmliche Fehlerquellen sind Fertigungstoleranzen und äußere Einflüsse oder Änderungen am Fahrwerk. So kann ein mehrmaliges Anfahren eines Bordsteins, wie es in der Regel bei einem längeren Fahren eines Fahrzeugs erfolgt, zu mechanischen Verstellungen am Fahrwerk führen. Auch Änderungen bei der Bereifung des Fahrzeugs können Abweichungen am eingestellten Lenkwinkel gegenüber einem vorgegebenen Soll-Radwinkel bewirken. Die in diesem Absatz genannten herkömmlichen Fehlerursachen können jedoch durch die erfindungsgemäße Vorrichtung und das entsprechende Verfahren ausgeglichen werden.

Die hier verwendete Bezeichnung Korrekturfaktor legt den Korrekturfaktor nicht als Faktor fest. Durch die Korrektur der Soll-Fahrtrichtungsgröße mit dem Korrekturfaktor kann schon vor dem Einstellen einer gewünschten Fahrtrichtung eine ohne die Korrektur wahrscheinliche Abweichung der Fahrtrichtung von der Soll-Fahrtrichtungsgröße verhindert werden. Damit wird schon vor dem Beginn des Fahrabschnitts, beispielsweise des Einparkvorgangs, ein verlässliches Abfahren sichergestellt.

Beispielsweise ist die vorgegebene Soll-Fahrtrichtungsgröße eine Soll-Fahrtrichtung, ein Soll-Lenkradwinkel und/oder ein Soll-Radwinkel, wobei die Ist-Fahrtrichtungsgröße eine Ist-Fahrtrichtung, ein Ist-Lenkradwinkel und/oder ein Ist-Radwinkel ist.

In einer vorteilhaften Weiterbildung ist die Auswerteeinrichtung zusätzlich dazu ausgelegt, über ein Vergleichen des Ist-Lenkradwinkels mit dem Soll-Lenkradwinkel und über ein Vergleichen des Ist-Radwinkels mit dem Soll-Radwinkel die möglichen Ursachen für das Abweichen der mindestens einen Ist-Fahrtrichtungsgröße um die mindestens eine Mindestdifferenz von der mindestens einen vorgegebenen Soll-Fahrtrichtungsgröße einzugrenzen. Entspricht beispielsweise der Ist-Lenkradwinkel dem Soll-Lenkradwinkel, so kann ausgeschlossen werden, dass das Abweichen des Ist-Radwinkels von dem Soll-Radwinkel auf eine Fehlfunktion der automatischen Lenkung zurückzuführen ist. Insbesondere kann über das Vergleichen mehrerer Ist-Werte mit mehreren Soll-Werten die Fehlerursache ermittelt werden. Dies reduziert die Kosten zur Behebung der Abweichung.

In einer weiteren vorteilhaften Weiterbildung weist die Vorrichtung einen weiteren Signaleingang auf, welcher dazu ausgelegt ist, eine von einem weiteren fahrzeugeigenen Sensor ermittelte Fahrzeugneigung und/oder einen von einem weiteren fahrzeugeigenen Sensor ermittelten Reibwert einer befahrenen Straße zu empfangen, wobei die Steuereinrichtung dazu ausgelegt ist, einen der Fahrzeugneigung und/oder dem Reibwert der befahrenen Straße entsprechenden Korrekturfaktor aus einer vorgegebenen Menge von Korrekturfaktoren von der Speichereinrichtung auszulesen. Dies ermöglicht ein Anpassen der korrigierten Soll-Fahrtrichtungsgröße, und damit der entsprechenden Ist-Fahrtrichtungsgröße, an Wetter- und Umgebungsbedingungen.

Die Vorrichtung und das Verfahren zum Überprüfen einer Ausführbarkeit einer vorgegebenen Soll-Fahrtrichtungsgröße für ein Fahrzeug basieren auf der Idee, die Lenkkräfte am Lenkstrang und/oder die Verstellkräfte an den Rädern entsprechend des eingestellten maximalen Lenkwinkels und/oder des maximalen Radwinkels während einer Fahrt mit Vergleichswerten zu vergleichen. Entspricht die anliegende Kraft nicht den Vergleichswerten für den maximalen Lenkradwinkel und/oder den maximalen Radwinkel, so ist es vorteilhaft, ab einer bestimmten Abweichung von mindestens einem Vergleichswert den maximal möglichen Lenkradwinkel und/oder den maximal möglichen Radwinkel neu zu bestimmten.

Mittels der Auswertung der aktuell anliegenden Kraft der elektronischen Lenkung für eine APG (Active Parking Guidance), beziehungsweise der Kraft der Servolenkung für eine PPG (Passive Parking Guidance), können in einer Ausführungsform Rückschlüsse auf Veränderungen des maximal möglichen Einschlagbereichs genommen werden.

In einer vorteilhaften Ausführungsform sind die Vorrichtung und das Verfahren auch auf Fahrzeuge ohne eine automatische Lenkung zum automatischen Einstellen eines Lenkradwinkels anwendbar. Dabei wird beispielsweise dem Fahrer ein von einem Einparkassistenten berechneter Einparkweg über eine optische Anzeige oder über eine akustische Ansage mitgeteilt. Während des Einparkzyklus wird die Kraft, welche der Fahrer auf das Lenkrad ausübt, beziehungsweise die Kraft, welche zum Verstellen der Räder aufgebracht wird, gemessen. Weichen die gemessenen Kräfte zu stark von einem im Vorfeld applizierten Schwellwert ab, so kann festgestellt werden, dass der Volleinschlag vom Fahrzeug nicht mehr verlässlich ausgeführt wird. Eine entsprechende Information kann anschließend dem Einparkassistenten mitgeteilt werden. Der Einparkassistent ist vorzugsweise dazu ausgelegt, nach einem Empfangen einer derartigen Nachricht den maximalen Einschlagwinkel nach unten zu korrigieren. Somit kann vermieden werden, dass ein technisch nicht realisierbarer Einschlagwinkel dem Fahrer durch den Einparkassistenten vorgegeben wird. Beispielsweise ist der Ausgangswert für den maximalen Einschlagwinkel durch eine Angabe des Herstellers vorgegeben.

In einer Weiterbildung ist auf der Vorrichtung mindestens ein Ausgangswert eines ausführbaren maximalen Lenkradwinkels und/oder eines ausführbaren maximalen Radwinkels des Fahrzeugs hinterlegt, wobei die Auswerteeinrichtung nach dem Empfang des Vergleichsignals zusätzlich dazu ausgelegt ist, sofern die mindestens eine Verstellkraft um die mindestens eine Mindestdifferenz von dem mindestens einem Vergleichswert abweicht, den ausführbaren maximalen Lenkradwinkel und/oder den ausführbaren maximalen Radwinkel des Fahrzeugs neu festzulegen, und wobei das an das automatische Fahrzeugsteuersystem ausgegebene Informationssignal eine Information über den neu festgelegten ausführbaren maximalen Lenkradwinkel und/oder den neu festgelegten ausführbaren maximalen Radwinkel umfasst. Somit ist immer eine aktuelle Information über den ausführbaren maximalen Lenkradwinkel und/oder über den ausführbaren maximalen Radwinkel am Fahrzeug vorhanden.

Insbesondere kann die Vorrichtung zusätzlich dazu ausgelegt sein, über ein Vergleichen mehrerer Verstellkräfte mit mehreren Vergleichswerten die möglichen Ursachen für das Abweichen der mindestens eine Verstellkraft um die mindestens eine Mindestdifferenz von dem mindestens einen Vergleichswert einzugrenzen. Insbesondere kann die Vorrichtung über das Vergleichen mehrerer Verstellkräfte mit mehreren Vergleichswerten die wahrscheinliche Ursache erkennen. Dies Erleichtert die Behebung der Ursache.

In einer weiteren vorteilhaften Weiterbildung weist die Vorrichtung einen dritten Signaleingang auf, welcher dazu ausgelegt ist, eine von einem weiteren fahrzeugeigenen Sensor ermittelte Fahrzeugneigung und/oder einen von einem weiteren fahrzeugeigenen Sensor ermittelten Reibwert einer befahrenen Straße zu empfangen, wobei die Vergleichseinrichtung dazu ausgelegt ist, mindestens einen der Fahrzeugneigung und/oder dem Reibwert der befahrenen Straße entsprechenden Vergleichswert aus einer vorgegebenen Menge von Vergleichswerten zu ermitteln. Die Vorrichtung berücksichtigt somit Umgebungs- und/oder Wetterbedingungen.

Die in den oberen Absätzen beschriebenen Vorteile der Vorrichtungen gelten auch für die entsprechenden Verfahren.

### Kurze Beschreibung der Zeichnungen

Weitere Merkmale und Vorteile der vorliegenden Erfindung werden nachfolgend anhand der Figuren erläutert. Es zeigen:
- Fig. 1: ein Koordinatensystem zum Darstellen eines Beispiels für eine von einem Einparkassistenten ermittelte Lenkwinkelanforderung im zeitlichen Verlauf;
- Fig. 2: ein Koordinatensystem zum Darstellen eines Beispiels für ein ungenaues Einhalten der vorgegebenen Soll-Lenkradwinkel der Fig. 1;
- Fig. 3: ein Flussdiagramm zum Darstellen einer ersten Ausführungsform des Verfahrens zum Steuern einer automatischen Lenkung eines Fahrzeugs;
- Fig. 4: ein Flussdiagramm zum Darstellen einer zweiten Ausführungsform des Verfahrens zum Steuern einer automatischen Lenkung eines Fahrzeugs;
- Fig. 5: eine schematische Darstellung der Vorrichtung zum Steuern einer automatischen Lenkung eines Fahrzeugs;
- Fig. 6: ein Koordinatensystem zum Darstellen einer Weiterbildung der Vorrichtung der Fig. 5;
- Fig. 7: eine schematische Darstellung eines in eine Parklücke einparkenden Fahrzeugs;
- Fig. 8: ein Flussdiagramm zum Darstellen einer Ausführungsform des Verfahrens Überprüfen einer Ausführbarkeit einer vorgegebenen Soll-Fahrtrichtungsgröße für ein Fahrzeug; und
- Fig. 9: eine schematische Darstellung der Vorrichtung zum Überprüfen einer Ausführbarkeit einer vorgegebenen Soll-Fahrtrichtungsgröße für ein Fahrzeug.

### Ausführungsformen der Erfindung

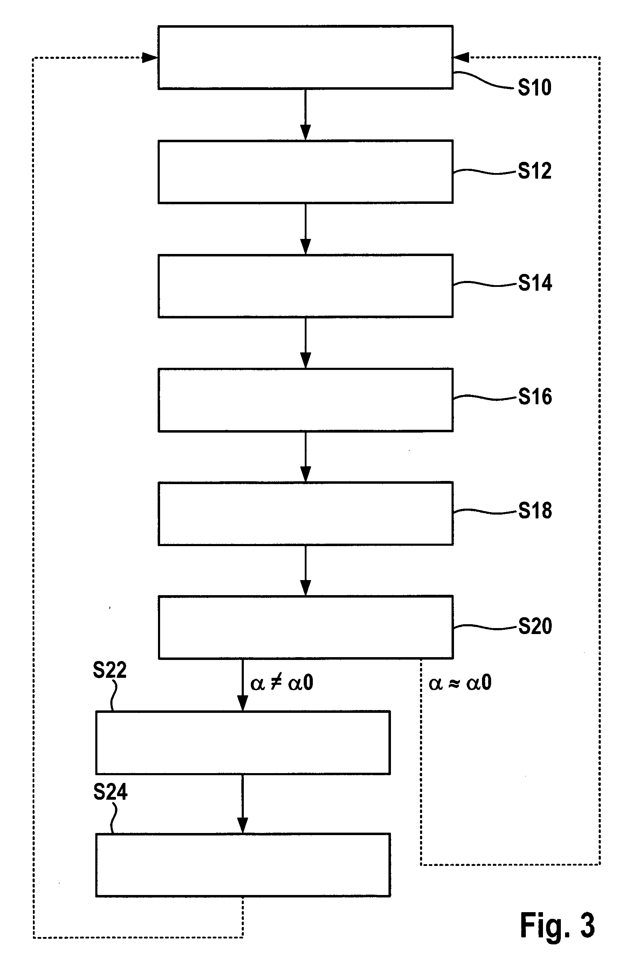

Fig. 3 zeigt ein Flussdiagramm zum Darstellen einer ersten Ausführungsform des Verfahrens zum Steuern einer automatischen Lenkung eines Fahrzeugs.

Zu Beginn des Verfahrens wird eine von einem automatischen Fahrzeugsteuersystem vorgegebenen Soll-Fahrtrichtungsgröße empfangen (Schritt S 10). Die Soll-Fahrtrichtungsgröße kann beispielsweise eine Soll-Fahrtrichtung, ein Soll-Lenkradwinkel und/oder ein zu einem bestimmten Zeitpunkt vorteilhaften Radwinkel sein. Anstelle einer einzelnen Größe kann auch eine Folge von Soll-Fahrtrichtungen, beispielsweise ein vorgegebener Einparkweg empfangen werden. Das automatische Fahrzeugsteuersystem kann insbesondere als Einparkassistent und/oder als automatisches Spurhaltesystem ausgebildet sein. Es wird jedoch ausdrücklich darauf hingewiesen, dass das hier beschriebene Verfahren für jedes automatische Fahrzeugsteuersystem, welches zum Bestimmen einer Soll-Fahrtrichtungsgröße während einer Fahrt des Fahrzeugs ausgelegt ist, anwendbar ist. Beispielsweise kann das automatische Fahrzeugsteuersystem auch ein fahrzeugexternes Verkehrssteuersystem sein.

In einem anschließenden Schritt S 12 wird ein hinterlegter Korrekturfaktor abgefragt. Vorzugsweise ist der Korrekturfaktor auf einer fahrzeugeigenen Speichereinrichtung abgespeichert. Beispielsweise speichert der Hersteller vor einer Inbetriebnahme des Fahrzeugs einen Ausgangswert für den Korrekturfaktor auf der Speichereinrichtung ab. Wie im Folgenden beschrieben wird, kann der Korrekturfaktor während der Benutzung des Fahrzeugs fortlaufend korrigiert und an wetterbedingte, umgebungsbedingte und fahrzeugbedingte Situationen angepasst werden.

Anhand des Korrekturfaktors und der vorgegebenen Soll-Fahrtrichtungsgröße wird eine korrigierte Soll-Fahrtrichtungsgröße ermittelt (Schritt S 14). Beispielsweise wird dabei der Korrekturfaktor mit der vorgegebenen Soll-Fahrtrichtungsgröße multipliziert und/oder ein konstanter Zahlenwert des Korrekturfaktors mit der vorgegebenen Soll-Fahrtrichtungsgröße addiert. Die hier verwendete Bezeichnung Korrekturfaktor legt den Korrekturfaktor nicht als Faktor fest.

Die automatische Lenkung wird in einem Schritt S 16 in einen Modus zum Einhalten der korrigierten Soll-Fahrtrichtungsgröße geschaltet. Dabei wird die automatische Lenkung so angesteuert, dass mit einem Einhalten der von dem automatischen Fahrzeugsteuersystem vorgegebenen Soll-Fahrtrichtungsgröße gerechnet werden kann. Die korrigierte Soll-Fahrtrichtungsgröße ist somit die Fahrtrichtungsgröße, bei welcher das Fahrzeug, beispielsweise aufgrund einer Veralterung und/oder einer Beschädigung von einigen seiner Komponenten, nicht in die der korrigierten Soll-Fahrtrichtungsgröße entsprechende Richtung, sondern in eine Richtung entsprechend der von dem automatischen Fahrzeugsteuersystem vorgegebenen Soll-Fahrtrichtungsgröße fährt. Ein genaueres Beispiel zum Verständnis der korrigierten Soll-Fahrtrichtungsgröße wird unten noch beschrieben.

Während des Zeitintervalls, in welchem das Fahrzeug in die vorgegebene Soll-Fahrtrichtungsgröße fahren soll, wird eine Ist-Fahrtrichtungsgröße des Fahrtzeugs ermittelt (Schritt S18). Dies geschieht vorzugsweise über mindestens einen fahrzeugeigenen Sensor. Der mindestens eine fahrzeugeigene Sensor kann ein Lenkradwinkelsensor und/oder ein Radwinkelsensor sein. Vorzugsweise ist der mindestens eine Sensor entsprechend seiner Funktion nahe am Lenkrad und/oder an mindestens einem Rad des Fahrzeugs angeordnet. Die mindestens eine ermittelte Ist-Fahrtrichtungsgröße ist beispielsweise ein am Lenkrad tatsächlich vorliegender Ist-Lenkradwinkel und/oder ein aktuell an einem Rad des Fahrzeugs vorliegender Radwinkel. Ebenso kann der mindestens eine Sensor ein GPS (Global Positioning System) mit einer geeigneten Auflösung zum genauen Ermitteln der aktuellen Ist-Fahrtrichtung des Fahrzeugs sein.

In einem nachfolgenden Schritt S20 wird die mindestens eine ermittelte Ist-Fahrtrichtungsgröße mit der vorgegebenen Soll-Fahrtrichtungsgröße verglichen. Weicht die Ist-Fahrtrichtungsgröße um mindestens eine Mindestdifferenz von der vorgegebenen Soll-Fahrtrichtungsgröße ab (α≠ α0), so wird in einem weiteren Schritt S22 der Korrekturfaktor entsprechend dem Vergleich neu festgelegt. Beispielsweise ist die Soll-Fahrtrichtungsgröße ein Soll-Lenkradwinkel von 300°. Der als Ist-Fahrtrichtungsgröße ermittelte Ist-Lenkradwinkel liegt jedoch nur bei 295°. In diesem Fall kann über ein Dividieren des Soll-Lenkradwinkels durch den Ist-Lenkradwinkel ein Korrekturfaktor von ungefähr 1,017 berechnet werden.

Der neu festgelegte Korrekturfaktor wird in einem folgenden Schritt S24 abgespeichert. Sobald von dem automatischen Fahrzeugsteuersystem eine weitere Soll-Fahrtrichtungsgröße empfangen wird, kann mittels des neu festgelegten Korrekturfaktors die zugehörige korrigierte Soll-Fahrtrichtungsgröße ermittelt werden. Somit wird die automatische Lenkung schon zu einen vorteilhaft frühen Zeitpunkt in den Modus geschaltet, in welchem nach neuen Erkenntnissen über die aktuelle Wetter- , Umgebungs- und/oder Fahrzeugsituation damit gerechnet werden kann, dass das Fahrzeug in die Richtung fährt, welche der von dem automatischen Fahrzeugsteuersystem vorgegebene Soll-Fahrtrichtungsgröße entspricht.

Die von dem automatischen Fahrzeugsteuersystem empfangene Soll-Fahrtrichtungsgröße ist beispielsweise ein Soll-Lenkradwinkel von 150°. Für eine vorausgehende Kompensierung einer wahrscheinlichen Abweichung zwischen dem Soll-Lenkradwinkel und einem Ist-Lenkradwinkel beim Schalten der automatischen Lenkung in einen Modus zum Einhalten des vorgegebenen Soll-Lenkradwinkels von 150° kann ein korrigierter Soll-Lenkradwinkel berechnet werden. Dazu kann der vorgegebene Soll-Lenkradwinkel mit dem neu festgelegten Korrekturfaktor von ungefähr 1,017 multipliziert werden. Beispielsweise wird dabei ein korrigierter Soll-Lenkradwinkel von 152° berechnet. Die automatische Lenkung wird anschließend in einen Modus zum Einhalten des korrigierten Soll-Lenkradwinkels von 152° geschaltet. Da sich das Ermitteln des korrigierten Soll-Lenkradwinkels relativ schnell ausführen lässt, ist die dadurch möglicherweise bedingte Verzögerung beim Ansteuern der automatischen Lenkung vernachlässigbar. Die automatischen Lenkung wird somit nach einem Empfang des vorgegebenen Soll-Lenkradwinkels von 150° direkt so angesteuert, dass der Ist-Lenkradwinkel tatsächlich 150° beträgt.

Wird in Schritt S20 festgestellt, dass die Ist-Fahrtrichtungsgröße der vorgegebenen Soll-Fahrtrichtungsgröße entspricht (a ≈ α0), so kann auf ein Neubestimmen des Korrekturfaktors verzichtet werden. Selbstverständlich kann jedoch auch in diesem Fall ein Wert für den Korrekturfaktor berechnet werden, welcher jedoch dem bisher verwendeten Wert für den Korrekturfaktor in etwa entspricht. Unter dem Vergleich der ermittelten Ist-Fahrtrichtungsgröße mit der vorgegebenen Soll-Fahrtrichtungsgröße und/oder mit der korrigierten Soll-Fahrtrichtungsgröße in Schritt 20 kann somit auch ein Rechenschritt verstanden werden, mit welchem fortlaufend ein aktueller Wert für den Korrekturfaktor bestimmt wird. Ein neues Festlegen des Korrekturfaktors erfolgte jedoch bei einer Ist-Fahrtrichtungsgröße entsprechend der vorgegebenen Soll-Fahrtrichtungsgröße nicht, da der aktuelle bestimmte Wert des Korrekturfaktors dem vorhergehenden Wert des Korrekturfaktors entspricht.

Das hier beschriebene Verfahren ermöglicht ein fortlaufendes Anpassen der im Verbund mit der Lenkradmechanik wirkenden Komponenten an den aktuellen Zustand der einzelnen Komponenten. Die im Verbund mit der Lenkradmechanik wirkenden Komponenten können beispielsweise eine elektrische Lenkung (Electronic Steering Chassis, ESC), ein Fahrwerk und/oder die Reifen des Fahrzeugs umfassen. Es wird hier ausdrücklich darauf hingewiesen, dass das hier beschriebene Verfahren nicht nur eine Veralterung und/oder Beschädigung der elektrischen Lenkung, sondern auch eine Fehlfunktion des Fahrwerks, ein abweichendes Verhalten beim Übersetzen des Lenkradwinkels in einen Radwinkel und/oder unterschiedliche Eigenschaften von Reifen kompensieren kann. Dies verbessert die Systemrobustheit der im Verbund mit der Lenkradmechanik wirkenden Komponenten erheblich. Der Korrekturfaktor kann dabei über ein fortlaufendes Neubestimmen (Tracken) stets aktualisiert werden. Ein massiver Applikationsaufwand ist dabei nicht nötig.

In einer Weiterbildung können auch mehrere Ist-Fahrtrichtungsgrößen mit der vorgegebenen Soll-Fahrtrichtungsgröße verglichen werden. Beispielsweise werden ein Ist-Lenkwinkel mit einem Soll-Lenkwinkel und ein Ist-Radwinkel mit einem Soll-Radwinkel verglichen. Der Soll-Lenkwinkel und der Soll-Radwinkel können von dem automatischen Fahrzeugsteuersystem bereitgestellt werden und/oder aus einer vorgegebenen Soll-Fahrtrichtungsgröße ermittelt werden. Durch den Vergleich mehrerer Ist-Werte mit mehreren Soll-Werten können die möglichen Ursachen für das Abweichen der mindestens einen Ist-Fahrtrichtungsgröße um die mindestens eine Mindestdifferenz von der mindestens einen vorgegebenen Soll-Fahrtrichtungsgröße eingegrenzt werden. Insbesondere kann festgestellt werden, aufgrund welcher funktionsbeeinträchtigten Komponente eine vorgegebene Soll-Fahrtrichtungsgröße vom Fahrzeug nicht eingehalten wird. Eine entsprechende Nachricht kann anschließend dem Fahrer mitgeteilt werden. Somit ermöglicht die Erfindung eine schnellere und kostengünstigere Behebung von Fehlfunktionen der im Verbund mit der Lenkradmechanik wirkenden Komponenten.

In einer weiteren bevorzugten Weiterbildung des Verfahrens kann der Vergleichswert in Abhängigkeit von einer Fahrzeugneigung(Straßenneigung) und/oder einem Reibwert der befahrenen Straße ermittelt werden. Herkömmlicherweise sind viele Fahrzeuge mit mindestens einem Sensor ausgestatten, mit welchem sich die Straßenneigung, die Fahrzeugneigung und/oder der Reibwert der befahrenen Straße bereits ermitteln lässt. Beispielsweise kann der Reibwert der befahrenen Straße mittels eines im ESP-oder ACC-System eingesetzten Sensors bestimmt werden.

Somit kann die Fahrzeugneigung(Straßenneigung) und/oder der Reibwert der befahrenen Straße vor einem Ermitteln der korrigierten Soll-Fahrtrichtungsgröße abgefragt werden. Anschließend wird der Korrekturfaktor aus einer Menge von mehreren Korrekturfaktoren von einer Speichereinrichtung ausgelesen, welcher der Straßenneigung, der Fahrzeugneigung und/oder dem Reibwert der befahrenen Straße am besten entspricht. Die auf diese Weise bestimmte korrigierte Soll-Fahrtrichtungsgröße ist somit besonders gut an die aktuellen Wetter- und/oder Umweltbedingen angepasst. Des Weiteren kann ein neubestimmter Korrekturfaktor zusammen mit mindestens einem aktuell ermittelten Wert für die Fahrzeugneigung(Straßenneigung) und/oder den Reibwert der befahrenen Straße abgespeichert werden.

Die hier beschriebene Weiterbildung des Verfahrens ermöglicht somit ein Lernen über eine optimale Richtungssteuerung des Fahrzeugs hinsichtlich dem Alterungs- und Funktionszustand des Fahrzeugs, den Wetter- und/oder den Umgebungsbedingungen. Somit können Abweichungen, welche sich beim Fahrtrichtungswechsel auf einer vereisten Straße sonst ergeben können, über das Lernen reduziert oder kompensiert werden.

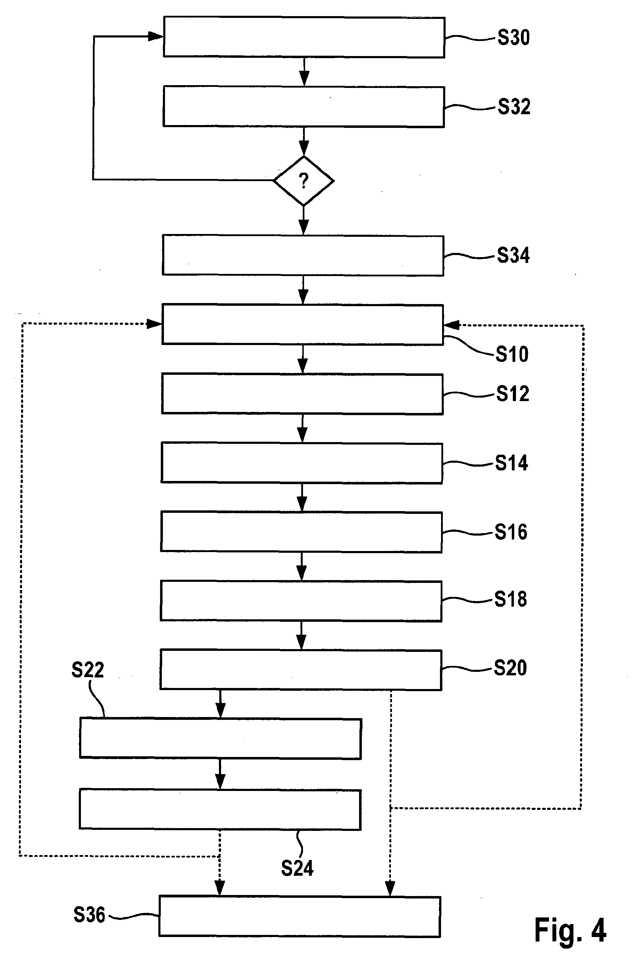

Fig. 4 zeigt ein Flussdiagramm zum Darstellen einer zweiten Ausführungsform des Verfahrens zum Steuern einer automatischen Lenkung eines Fahrzeugs.

Während eines ersten Schritts S30 des Verfahrens wird eine Parklückenlokalisierung ausgeführt. Bei der Parklückenlokalisierung ist ein Einparkassistent des Fahrzeugs, beispielsweise ein semi-autonomer Einparkassistent (PSC) in einem Modus aktiviert, in welchem der Einparkassistent während der Fahrt des Fahrzeugs nach einer Parklücke sucht. Da Verfahren zum Ermitteln einer Parklücke, beispielsweise über einen im Stoßfänger integrierten Ultraschallsensor, aus dem Stand der Technik bekannt sind, wird hier nicht genauer darauf eingegangen. Während der Vorbeifahrt an einer potentiellen Parklücke vermisst der Sensor des Einparkassistenten die Parklücke und ermittelt die Lage des Fahrzeugs zu der Parklücke.

Entspricht die Parklücke den gewünschten Anforderungen, so erhält der Fahrer über eine Ausgabeeinrichtung, beispielsweise über ein Display, eine Meldung über die gefundene Parklücke (Schritt 32). Der Fahrer hat nun die Möglichkeit, über eine entsprechende Eingabe der gefundenen Parklücke zuzustimmen. Tut er es nicht, so werden die Schritte S30 und S32 wiederholt.

Gibt der Fahrer seine Zustimmung zu der gefundenen Parklücke, so berechnet der Einparkassistent in einem weiteren Schritt S34 einen vorteilhaften Einparkweg. Das Ermitteln des vorteilhaften Einparkwegs kann wie oben bereits beschrieben ausgeführt werden. Anschließend werden die Daten des ermittelten Einparkwegs, insbesondere die mindestens eine Soll-Fahrtrichtungsgröße, ausgegeben.

Das anhand der Fig. 3 beschriebene Verfahren kann nun ausgeführt werden. In Schritt S10 wird ein Soll-Lenkradwinkel als die mindestens eine Soll-Fahrtrichtungsgröße empfangen. Mittels des in Schritt S12 abgelesenen Korrekturfaktors wird danach mindestens ein korrigierter Soll-Lenkradwinkel als korrigierte Soll-Fahrtrichtungsgröße berechnet (Schritt S14).

Der korrigierte Soll-Lenkwinkel kann in einem Schritt S16 als Lenkwinkelanforderung an eine automatische Lenkung ausgegeben werden. In diesem Fall ist die automatische Lenkung so ausgelegt, dass sie nach einem Empfangen der korrigierten Soll-Fahrtrichtungsgröße das Lenkrad des Fahrzeugs so verstellt, dass die mindestens eine vorgegebene Soll-Fahrtrichtungsgröße während der vorgegebenen Zeitintervalle möglichst genau eingehalten wird.

Sobald sich der stabile (konstante) Zustand der Lenkwinkelanforderung eingestellt hat, kann der reale Ist-Lenkradwinkel ermittelt werden (Schritt S18). Der Ist-Lenkradwinkel ist beispielsweise über den Fahrzeugbus (CAN) erfragbar. Der reale Offset des Ist-Lenkradwinkels von dem vorgegebenen Soll-Lenkradwinkel und/oder dem korrigierten Soll-Lenkradwinkel lässt sich nun mittels eines Vergleichs und/oder einer Differenz der mindestens zwei Größen ermitteln (Schritt 20). In einer Weiterbildung des Verfahrens kann der durch die Lenkradmechanik bedingte Offset für verschiedene geforderte Lenkradwinkelanforderungen (Soll-Lenkradwinkel) getrackt werden.

Wird in Schritt S20 festgestellt, dass der Ist-Lenkradwinkels von dem vorgegebenen Soll-Lenkradwinkel und/oder dem korrigierten Soll-Lenkradwinkel signifikant abweicht, so wird der Korrekturfaktor neu festgelegt (Schritt S22) und für eine folgende Korrektur des von dem Einparkassistenten vorgegebenen Soll-Lenkradwinkels abgespeichert (Schritt S24). Da die Schritte S22 und S24 oben ausführlich beschrieben sind, wird hier nicht weiter auf sie eingegangen.

Die Schritte S 10 bis S20 werden so oft wiederholt, bis das Fahrzeug in der Parklücke ist. Danach wird das Verfahren mit einer Deaktivierung des Einparkassistenten beenden (Schritt S36).

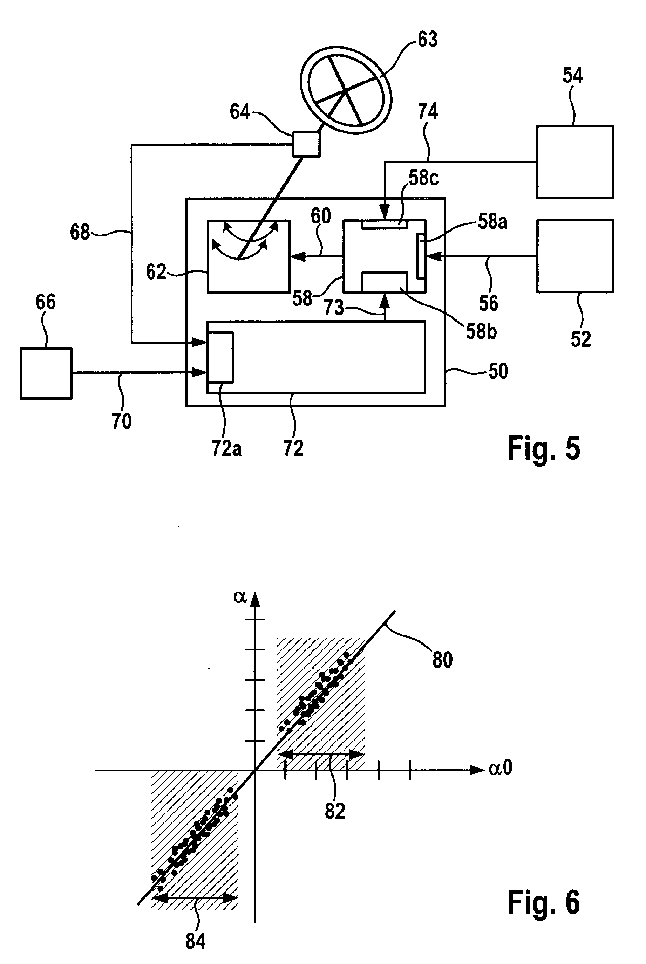

Fig. 5 zeigt eine schematische Darstellung der Vorrichtung zum Steuern einer automatischen Lenkung eines Fahrzeugs.

Ein (nicht dargestelltes) Fahrzeug mit der Vorrichtung 50 zum Steuern einer automatischen Lenkung des Fahrzeugs ist zusätzlich mit mindestens einem automatischen Fahrzeugsteuersystem 52 und 54 ausgestattet. Beispielsweise weist das Fahrzeug ein erstes automatisches Fahrzeugsteuersystem 52 auf, welches als Einparkassistent dazu ausgelegt ist, eine Information über einen vorteilhaften Einparkweg an die Vorrichtung 50 bereitzustellen. Das erste automatische Fahrzeugsteuersystem 52 gibt dabei mit einem Ausgabesignal 56 mindestens eine Soll-Fahrtrichtungsgröße der Vorrichtung 50 vor. Die mindestens eine Soll-Fahrtrichtungsgröße des Ausgabesignals 56 ist beispielsweise eine Soll-Fahrtrichtung, ein Soll-Lenkradwinkel und/oder ein Soll-Radwinkel.

Die Vorrichtung 50 weist einen ersten Signaleingang 58a zum Empfangen der vorgegebenen Soll-Fahrtrichtungsgröße auf. Beispielsweise ist der erste Signaleingang 58a eine Untereinheit einer Steuereinrichtung 58 der Vorrichtung 50. Die Steuereinrichtung 58 ist beispielsweise dazu ausgelegt, mittels eines Steuersignals 60 eine automatische Lenkung 62 des Fahrzeugs so zu steuern, dass der Fahrer während einer Fahrt des Fahrzeugs kaum noch eine Betätigung des Lenkrads 63 ausführen muss. Vorzugsweise übernimmt die Steuereinrichtung 58 die Steuerung der aktuellen Fahrtrichtung des Fahrzeugs vollständig. Ein Lenkradeingriff von Seiten des Fahrers ist in diesem Fall nicht notwendig.

Die automatische Lenkung 62 kann als elektrische Lenkung des Fahrzeugs ausgebildet sein. Die automatische Lenkung 62 kann eine Untereinheit der Vorrichtung 50 sein. Ebenso ist es möglich, dass die Vorrichtung 50 getrennt von der automatischen Lenkung 62 am Fahrzeug angeordnet ist und das Steuersignal 60 über den Fahrzeugbus an die automatische Lenkung 62 weitergeleitet wird.

Die automatische Lenkung 62 kann jedoch auch so ausgebildet sein, dass sie die Betätigung des Lenkrads 63 durch den Fahrer lediglich unterstützt. Beispielsweise übt die automatische Lenkung 62 eine Kraft auf das Lenkrad 63 aus, welche eine vorteilhafte Betätigung des Lenkrads 63 durch den Fahrer erleichtert. Die von der automatischen Lenkung 62 auf das Lenkrad 63 ausgeübte Kraft wirkt beispielsweise in die Drehrichtung, in welche der Fahrer das Lenkrad 63 drehen soll. Dreht der Fahrer das Lenkrad 63 hingegen entgegen der vorteilhaften Drehrichtung, so wird er aufgrund der vergleichsweise großen Kraft, mit welcher er der automatischen Lenkung 62 entgegenwirken muss, auf seine unvorteilhafte Lenkradbetätigung aufmerksam gemacht.

Die Steuereinrichtung 58 ist an eine Speichereinrichtung 58b gekoppelt, auf welcher mindestens ein Korrekturfaktor ablesbar abgespeichert ist. Die Speichereinrichtung 58b kann als Untereinheit der Steuereinrichtung 58 oder als eine getrennt von der Steuereinrichtung 58 angeordnete Einheit ausgebildet sein. Auf das Ablesen eines geeigneten Korrekturfaktors wird unten noch genauer eingegangen. Die Steuereinrichtung 58 ist dazu ausgelegt, nach einem Empfang einer Soll-Fahrtrichtungsgröße eine korrigierte Soll-Fahrtrichtungsgröße anhand des Korrekturfaktors und der vorgegebenen Soll-Fahrtrichtungsgröße zu ermitteln und die automatische Lenkung 62 mittels des Steuersignals 60 in einen Modus zum Einhalten der korrigierten Soll-Fahrtrichtungsgröße zu schalten. Unter dem Schalten der automatischen Lenkung 62 kann auch ein Ansteuern verstanden werden. Da der Zweck der korrigierten Soll-Fahrtrichtungsgröße oben schon ausführlich beschrieben ist, wird hier nicht noch einmal darauf eingegangen.

Die automatische Lenkung 62 verstellt nach einem Empfang des Steuersignals 60 das Lenkrad 63. Das Verstellen des Lenkrads 63 durch die automatische Lenkung 62 ist über mindestens einen fahrzeugeigenen Sensor 64 und 66 erfassbar. Der Sensor 64 ist beispielsweise als Lenkradwinkelsensor dazu ausgelegt, die aktuelle Stellung des Lenkrads 63 zu ermitteln. Ein erstes Sensorsignal 68 mit einem von dem Sensor 64 ermittelten Ist-Lenkradwinkel wird anschließend an die Vorrichtung 50 bereitgestellt.

Das Verstellen des Lenkrads 63 durch die Lenkradmechanik 62 bewirkt eine Änderung der aktuellen Stellung der Räder. Die Stellung mindestens eines (nicht skizzierten) Rades kann über den als Radwinkelsensor ausgebildeten Sensor 66 ermittelt und über ein zweites Sensorsignal 70 mit einem Ist-Radwinkel an die Vorrichtung 50 bereitgestellt werden.

Die Vorrichtung 50 weist einen zweiten Signaleingang 72a zum Empfangen der von den Sensoren 64 und 66 ausgegebenen Sensorsignale 68 und 70 auf. Der zweite Signaleingang 72a ist an eine Auswerteeinrichtung 72 zum Auswerten des Ist-Lenkradwinkels und/oder des Ist-Radwinkels angekoppelt.

Die Auswerteeinrichtung 72 ist dazu ausgelegt, die mindestens eine von einem Sensor 64 und 66 des Fahrzeugs ermittelte Ist-Fahrtrichtungsgröße mit der mindestens einen vorgegebenen Soll-Fahrtrichtungsgröße zu vergleichen. Bei dem dargestellten Beispiel vergleicht die Auswerteeinrichtung 72 den Ist-Lenkradwinkel mit dem bereitgestellten Soll-Lenkradwinkel und den Ist-Radwinkel mit dem bereitgestellten Soll-Radwinkel. Das Signal zum Bereitstellen des Soll-Lenkradwinkels und des Soll-Radwinkels an die Auswerteeinrichtung 72 ist der besseren Übersichtlichkeit wegen nicht in Fig. 5 eingezeichnet.

Unter einem Vergleich der mindestens einen Ist-Fahrtrichtungsgröße mit der mindestens einen vorgegebenen Soll-Fahrtrichtungsgröße kann auch das Berechnen eines den Vergleich wiedergebenden Zahlenwerts verstanden werden. Beispiele zum Berechnen dieses Zahlenwerts sind oben schon gegeben. Ein weiteres Beispiel für eine vorteilhafte Ermittlung des Zahlenwerts wird bei der Beschreibung der Fig. 6 erläutert.

Somit ist die Auswerteeinrichtung 72 in einer Situation, in welcher die Ist-Fahrtrichtungsgröße um mindestens eine Mindestdifferenz von der vorgegebenen Soll-Fahrtrichtungsgröße abweicht, dazu ausgelegt, einen die Abweichung wiedergebenden Zahlenwert zu berechenen. Selbstverständlich kann in einer besonderen Ausführungsform der Vorrichtung 50 dieser Zahlenwert nur nach einem Feststellen eines Überschreitens der Mindestdifferenz zwischen der Ist-Fahrtrichtungsgröße und der vorgegebenen Soll-Fahrtrichtungsgröße berechnet werden. Ein dem berechneten Zahlenwert entsprechender Korrekturfaktor wird anschließend neu festgelegt und mittels eines Speichersignals 73 an die Speichereinrichtung 58 ausgegeben. Der Korrekturfaktor wird auf der Speichereinrichtung 58b abgespeichert.

Bei einem späteren Ermitteln einer korrigierten Soll-Fahrtrichtungsgröße kann der neu festgelegte Korrekturfaktor herangezogen werden. Somit ist es möglich, Abweichungen der automatischen Lenkung 62 beim Verstellen des Lenkrads 63, welche sich beispielsweise aufgrund einer Alterung der automatischen Lenkung 62 oder anderer Lenkrad-Komponenten ergeben, entgegenzuwirken. Dies gewährleistet eine vorbeugende Korrektur beim automatischen Verstellen des Lenkrads 63. Zusätzlich ist es möglich, durch das Vergleichen des Ist-Radwinkels mit dem Soll-Radwinkel eine fehlerbehaftete Übersetzung des Ist-Lenkradwinkels in den Ist-Radwinkel zu kompensieren. Dies gewährleistet zusätzlich ein Entgegenwirken von Alterungsprozessen und/oder mechanischen Verstellungen am Fahrwerk.

In einer bevorzugten Ausführungsform ist die Steuereinrichtung 58 an einen dritten Signaleingang 58c zum Empfangen eines Datensignals 74 mit einer aktuellen Fahrzeugneigung (Straßenneigung) und/oder einen Reibwert einer gerade befahrenen Straße gekoppelt. Das Datensignal 74 mit der aktuellen Fahrzeugneigung und/oder dem Reibwert der gerade befahrenen Straße wird beispielsweise von dem zweiten automatischen Fahrzeugsteuersystem 54 bereitgestellt. Ein derartiges zweites automatisches Fahrzeugsteuersystem 54, welches dazu ausgelegt ist, die aktuelle Fahrzeugneigung und/oder den Reibwert der gerade befahrenen Straße zu ermitteln, ist beispielsweise ein ESP- oder ein ACC-System. Selbstverständlich kann das zweite automatische Fahrzeugsteuersystem 54 auch einstückig mit dem ersten automatischen Fahrzeugsteuersystem 52 ausgebildet sein.

Die Steuereinrichtung 58 oder die Auswerteeinrichtung 72 kann so ausgelegt sein, dass sie einen von der Auswerteeinrichtung 72 ermittelten Korrekturwert zusammen mit dem zugehörigen Wert für die Fahrzeugneigung und/oder für den Reibwert der gerade befahrenen Straße auf der Speichereinrichtung 58b abspeichert. Zu einem späteren Zeitpunkt wird beim Ermitteln der korrigierten Soll-Fahrtrichtungsgröße anhand eines empfangenen Datensignals 74 der Korrekturfaktor von der Speichereinrichtung 58b abgefragt, welcher bei einem entsprechenden Wert für die Fahrzeugneigung und/oder für den Reibwert der gerade befahrenen Straße (neu) festgelegt ist.

In den oberen Absätzen ist die beschriebene Vorrichtung 50 dazu ausgelegt ist, Signale von einem Einparkassistenten zu empfangen und zum Verstellen des Lenkrads 63 auszuwerten. Selbstverständlich ist die vorliegende Erfindung nicht auf dieses Anwendungsbeispiel beschränkt. Die Vorrichtung 50 kann auch dazu ausgelegt sein, in einem anderen selbstfahrenden Modus des Fahrzeugs das Lenkrad 63 entsprechend den Vorgaben eines anderen automatischen Fahrzeugsteuersystems 52, beispielsweise eines automatischen Spurhaltesystems, zu betätigen.

Fig. 6 zeigt ein Koordinatensystem zum Darstellen einer Weiterbildung der Vorrichtung der Fig. 5. Die Abszisse des Koordinatensystems gibt die Soll-Lenkradwinkel α0 an, welche bei einem oder mehreren Einparkvorgängen von einem als Einparkassistent fungierenden automatischen Fahrzeugsteuersystem vorgegeben werden. Die Abszisse des Koordinatensystems entspricht den zu den vorgegebenen Soll-Lenkradwinkeln α0 ermittelten Ist-Lenkradwinkeln α. Beispielsweise werden die Ist-Lenkradwinkel α von einem Lenkradwinkelsensor an den Fahrzeugbus ausgegeben und von einer Auswerteeinrichtung aus dem Fahrzeugbus abgelesen.

Die in das Koordinatensystem eingetragenen Punkte entsprechen den Wertepaaren aus Soll-Lenkradwinkeln α0 und Ist-Lenkradwinkeln α. Sie beziehen sich auf unterschiedliche parametrierte Lenkradwinkelbereiche 82 und 84. Beispielsweise kann bei den Lenkradwinkelbereichen 82 und 84 zwischen einer Vorwärtsfahrt und einer Rückwärtsfahrt des Fahrzeugs unterschieden werden.

Anhand der in das Koordinatensystem eingetragenen Punkte lässt sich eine Regressionsgerade 80 oder Ausgleichsgerade ermitteln. Die Steigung der Regressionsgerade 80 kann von der Auswerteeinrichtung ermittelt und anschließend als Korrekturfaktor auf der Speichereinrichtung abgespeichert werden.

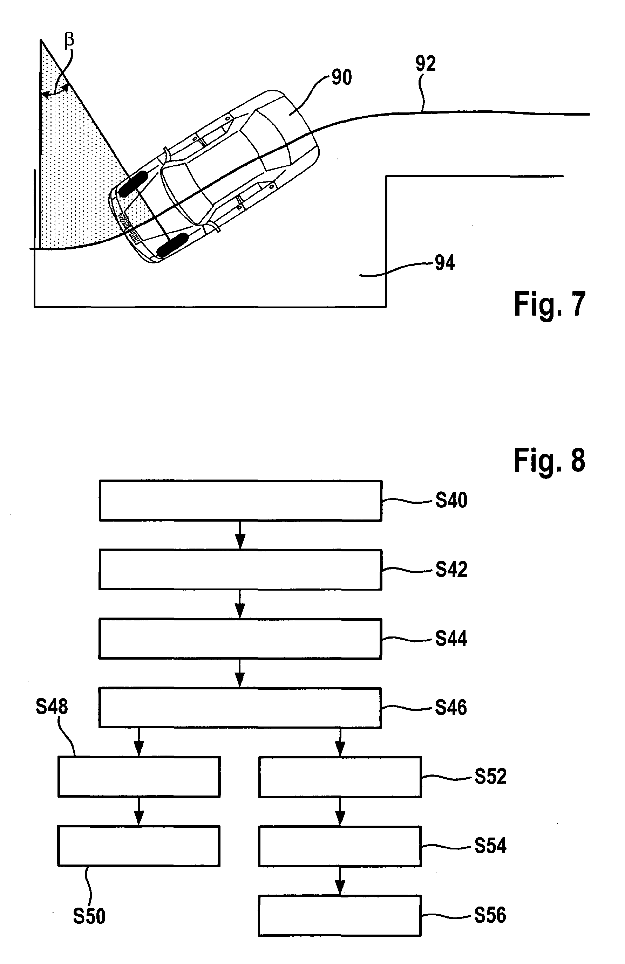

Fig. 7 zeigt eine schematische Darstellung eines in eine Parklücke einparkenden Fahrzeugs.

Das schematisch wiedergegebene Fahrzeug 90 wird über ein automatisches Abfahren einer von einem nicht dargestellten Einparkassistenten ermittelten Einparktrajektorie 92 in eine Parklücke 94 gelotst. Vorzugsweise erfolgt das automatische Abfahren der Einparktrajektorie 92 mittels einer automatischen Lenkradregelung, wie beispielsweise eine elektrische Lenkung. Zu jedem Zeitpunkt des Einparkvorgangs kann die Position des Fahrzeugs 90 relativ zur Parklücke 94 über ein odometrisches Verfahren, beispielsweise unter Verwendung eines Lenkradwinkelsensors oder eines Radimpulszählers, ermittelt werden.

Für ein genaues Abfahren der vorgegebenen Einparktrajektorie 92 ist es wichtig, dass der ausführbare maximale Lenkradwinkel und/oder der ausführbare maximale Radwinkel des Fahrzeugs 90 größer oder gleich dem größten Lenkradwinkel β und/oder dem größten Radwinkel der Einparktrajektorie 92 sind. Dabei kann die Einparktrajektorie 92, insbesondere bei einem Einparkweg in eine enge Parklücke 94 vergleichsweise große Lenkradwinkel (Volleinschlag) und/oder Radwinkel aufweisen.

Der ausführbare maximale Lenkradwinkel und/oder der ausführbare maximale Radwinkel des Fahrzeugs 90 werden in der Regel vom Hersteller einmalig appliziert. Jedoch können während des Betriebs des Fahrzeugs 90, beispielsweise aufgrund einer Fahrzeugalterung oder einer Beschädigung am Fahrwerk, Veränderungen am Fahrzeug 90 auftreten, welche zu einer signifikanten Reduzierung des ausführbaren maximalen Lenkradwinkels und/oder des ausführbaren maximalen Radwinkel führen. Das im Folgenden anhand der Fig. 8 beschriebene Verfahren kann dieses Problem beheben.

Fig. 8 zeigt ein Flussdiagramm zum Darstellen einer Ausführungsform des Verfahrens zum Überprüfen einer Ausführbarkeit einer vorgegebenen Soll-Fahrtrichtungsgröße für ein Fahrzeug.

In einem ersten Schritt S40 des Verfahrens wird eine von einem Fahrer und/oder von einem automatischen Fahrzeugsteuersystem vorgegebene Soll-Fahrtrichtungsgröße empfangen. Beispielsweise gibt ein Einparkassistent die Soll-Fahrtrichtungsgröße durch einen Einparkweg, welcher an eine automatische Lenkung bereitgestellt wird, vor. Die auf diese Weise vorgegebene Soll-Fahrtrichtungsgröße kann anschließend zur Durchführung des hier beschriebenen Verfahrens herangezogen werden. In diesem Fall wird der Schritt S40 beispielsweise nach den oben schon beschriebenen Verfahrensschritten S30 bis S34 ausgeführt.

Es wird hier ausdrücklich darauf verwiesen, dass das beschriebene Verfahren nicht auf Einparkvorgänge beschränkt ist. Beispielsweise kann auch ein anderes automatisches Fahrzeugsteuersystem, wie ein automatisches Spurhaltesystem oder ein fahrzeugexternes Verkehrssteuersystem, die vorgegebene Soll-Fahrtrichtungsgröße bereitstellen. Zusätzlich kann der Fahrer, beispielsweise über ein Drehen des Lenkrads, die Soll-Fahrtrichtungsgröße vorgeben. Das Fahrzeug kann sich dabei auch in einem Betriebsmodus befinden, in welchem die Fahrtrichtung ausschließlich durch den Fahrer vorgegeben wird. Die Soll-Fahrtrichtungsgröße kann eine Soll-Fahrtrichtung, ein Soll-Lenkradwinkel und/oder ein Soll-Radwinkel sein.

Anschließend erfolgt eine Änderung der aktuellen Fahrrichtung des Fahrzeugs entsprechend der vorgegebenen Soll-Fahrtrichtungsgröße (Schritt S42). Während dieses Vorgangs wird mindestens eine bei dem Ändern der aktuellen Fahrrichtung zum Verstellen des Lenkrads und/oder eines Rads des Fahrzeugs aufgebrachte Verstellkraft ermittelt (Schritt S44). Das Ermitteln der mindestens einen Verstellkraft erfolgt dabei durch mindestens einen fahrzeugeigenen Sensor.

Anschließend wird in Schritt S46 die mindestens eine Verstellkraft mit mindestens einem vorgegebenen Vergleichswert verglichen werden. Wird in Schritt S46 festgestellt, dass die mindestens eine bereitgestellte Verstellkraft dem mindestens einen vorgegebenen Vergleichswert entspricht, so wird festgestellt, dass die vorgegebene Soll-Fahrtrichtungsgröße für das Fahrzeug einhaltbar ist (Schritt S48). Ein entsprechendes Signal mit dieser Information kann anschließend an mindestens eine fahrzeugeigene Einrichtung, beispielsweise an das automatische Fahrzeugsteuersystem, ausgegeben werden (Schritt S50). Auch eine entsprechende Benachrichtigung des Fahrers ist möglich.

Unter einer Verstellkraft, welche einem vorgegebenen Vergleichswert entspricht, kann auch eine Verstellkraft unter einem vorgegebenen Schwellwert oder innerhalb eines vorgegebenen Wertebereichs verstanden werden.

Sofern die mindestens eine Verstellkraft um mindestens eine Mindestdifferenz, die in dieser Ausführungsform einen Standard für ein ordnungsgemäßes automatisches Lenken definiert, von dem mindestens einen Vergleichswert abweicht, wird festgestellt, dass die vorgegebene Soll-Fahrtrichtungsgröße für das Fahrzeug nur noch bedingt einhaltbar ist (Schritt S52). Eine entsprechende Nachricht kann sofort dem Fahrer mitgeteilt werden (Schritt S54). Dies geschieht beispielsweise über eine Ansage oder über eine Anzeige. Der Fahrer hat nun die Möglichkeit, eine Werkstatt aufzusuchen und den Schaden am Fahrzeug, welcher die Reduzierung des ausführbaren maximalen Lenkradwinkels und/oder des ausführbaren maximalen Radwinkels bedingt, beheben zu lassen. Über ein Vergleichen mehrerer Verstellkräfte mit mehreren Vergleichswerten können die möglichen Ursachen für das Abweichen der mindestens einen Verstellkraft um die mindestens eine Mindestdifferenz von dem mindestens einen Vergleichswert eingegrenzt werden. Insbesondere kann über das Vergleichen mehrerer Verstellkräfte mit mehreren Vergleichswerten die Ursache für die ungenügende Ausführbarkeit der vorgegebenen Soll-Fahrtrichtungsgröße festgestellt werden. Eine Fehlfunktion aufgrund systemfremder Veränderungen, wie zum Beispiel Spurverstellungen aufgrund von Kollisionen mit dem Bordstein, und/oder einer Alterung der elektrischen Lenkung ist somit erkennbar. Dies reduziert die Reparaturkosten.

Diese ungenügende Ausführbarkeit der vorgegebenen Soll-Fahrtrichtungsgröße bewirkt eine Reduzierung des ausführbaren maximalen Lenkradwinkels und/oder des ausführbaren maximalen Radwinkels. Durch das vorliegende Verfahren ist diese Reduzierung jedoch häufig leicht und kostengünstig behebbar.

Als Alternative oder als Ergänzung zu Schritt S54 kann ein Informationssignal an das automatische Fahrzeugsteuersystem in einem Schritt S56 ausgegeben werden. Das Informationssignal enthält beispielsweise die Nachricht, dass die vorgegebene Soll-Fahrtrichtungsgröße, und damit ein bisher ausführbarer maximaler Lenkradwinkel und/oder ein bisher ausführbare maximaler Radwinkel, für das Fahrzeug nicht mehr einhaltbar ist. In einer bevorzugten Ausführungsform des Verfahrens ist das automatische Fahrzeugsteuersystem so ausgelegt, dass nach einem Empfangen des Informationssignals nur noch kleinere Lenkradwinkel und/oder Radwinkel der elektrischen Lenkung vorgegeben werden. Beispielsweise berechnet der Einparkassistent nach dem Empfangen des Informationssignals ausschließlich Einparkwege mit kleineren Lenkradwinkeln und/oder Radwinkeln.

Das Verfahren bietet somit den Vorteil, dass die vom Einparkassistenten ausgeführte Bahnplanung, welche den optimalen Weg des Fahrzeugs in die Parklücke plant, nur technisch mögliche Konstellationen berücksichtigt. Mittels dieser Maßnahme wird die Robustheit des Systems um ein Vielfaches verbessert.

In einer Weiterbildung des Verfahrens kann, sofern festgestellt wird, dass die vorgegebene Soll-Fahrtrichtungsgröße für das Fahrzeug nur noch bedingt einhaltbar ist, in Schritt S52 ein Neubestimmen des ausführbaren maximalen Lenkradwinkels und/oder des ausführbaren maximalen Radwinkels des Fahrzeugs eingeleitet werden. Vorzugsweise wird der ausführbare maximale Lenkradwinkel und/oder der ausführbare maximale Radwinkel des Fahrzeugs unter Berücksichtigung der mindestens einen Verstellkraft so neu festgelegt, dass ein sicheres Ausführen des ausführbaren maximalen Lenkradwinkels und/oder des ausführbaren maximalen Radwinkels durch das Fahrzeug gewährleistet ist. Insbesondere kann der ausführbare maximale Lenkradwinkel und/oder der ausführbare maximale Radwinkel anschließend über das Informationssignal dem automatischen Fahrzeugsteuersystem mitgeteilt werden.

Im Fall abschüssiger Untergründe kann es vorkommen, dass für den Volleinschlag eine größere Kraft aufgebracht werden muss als auf einer perfekten Ebene. Bei dem vorliegenden Verfahren kann die Fahrzeugneigung (Straßenneigung) beim Vergleich der ermittelten Kräfte mit dem mindestens einen Schwellwert berücksichtigt werden. Die Fahrzeugneigung (Straßenneigung) kann beispielsweise im Stillstand, bevor das Fahrzeug mittels des Rückwärtszuges in die Parklücke stößt, bestimmt werden. Somit ist schon vor einem Fahren des Volleinschlags die Fahrzeugneigung bekannt.

Ebenso kann der Reibwert der befahrenen Straße die Verstellkraft beeinflussen. Möglichkeiten zum vorteilhaften Bestimmen der Fahrzeugneigung (Straßenneigung) und/oder des Reibwerts der befahrenen Straße mit bereits am Fahrzeug herkömmlicherweise vorhandenen Sensoren sind oben beschrieben.

In einer weiteren bevorzugten Weiterbildung wird für einen Wertebereich der Fahrzeugneigung (Straßenneigung) und/oder des Reibwerts der befahrenen Straße mindestens ein Vergleichswert vom Hersteller einer Vorrichtung zum Ausführen des hier beschriebenen Verfahrens auf einer Speichereinrichtung abgespeichert. Dies ermöglicht ein verlässliches Überprüfen der Ausführbarkeit der vorgegebenen Soll-Fahrtrichtungsgröße unter Berücksichtigung der Wetter- und/oder Umgebungsbedingungen.

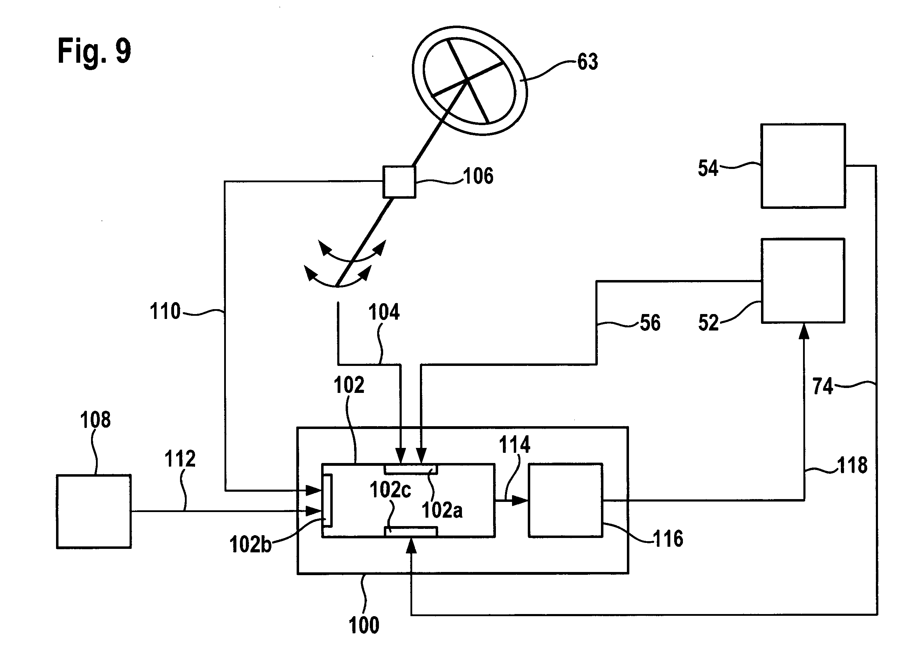

Fig. 9 zeigt eine schematische Darstellung der Vorrichtung zum Überprüfen einer Ausführbarkeit einer vorgegebenen Soll-Fahrtrichtungsgröße für ein Fahrzeug.

Die Vorrichtung 100 um Überprüfen einer Ausführbarkeit einer vorgegebenen Soll-Fahrtrichtungsgröße kann dazu ausgelegt sein, mit den schon beschriebenen automatischen Fahrzeugsteuersystemen 52 und 54 zusammenzuwirken. Beispielsweise weist die Vorrichtung 100 einen ersten Signaleingang 102a zum Empfangen des Ausgabesignals 56 des automatischen Fahrzeugsteuersystems 52 auf. Das Ausgabesignal 56 enthält in diesem Fall eine vorgegebene Soll-Fahrtrichtungsgröße, welche beispielsweise mittels einer nicht skizzierten automatischen Lenkung am Lenkrad 63 und/oder an mindestens einem der Räder eingestellt wird. Als Alternative oder als Ergänzung dazu kann der erste Signaleingang 102a auch dazu ausgelegt sein, eine von einem Fahrer vorgegebene Soll-Fahrtrichtungsgröße zu empfangen. Zum Vorgeben der Soll-Fahrtrichtungsgröße betätigt der Fahrer beispielsweise das Lenkrad 63. In diesem Fall wird ein Lenkradsignal 104 mit der vorgegebenen Soll-Fahrtrichtungsgröße am ersten Signaleingang 102a bereitgestellt.

Der erste Signaleingang 102a ist an eine Vergleichseinrichtung 102 gekoppelt, auf welche unten noch genauer eingegangen wird. Die Vergleichseinrichtung 102 ist zusätzlich an einen zweiten Signaleingang 102b gekoppelt. Der zweite Signaleingang 102b dient zum Empfangen von mindestens einer Verstellkraft zum Verstellen des Lenkrads 63 und/oder eines (nicht dargestellten) Rads des Fahrzeugs beim Ändern der aktuellen Fahrrichtung des Fahrzeugs entsprechend der vorgegebenen Soll-Fahrtrichtungsgröße. Dabei wird die mindestens eine Verstellkraft von mindestens einem Sensor 106 und 108 des Fahrzeugs über ein Sensorsignal 110 und 112 bereitgestellt.

Beispielsweise ist der Sensor 106 dazu ausgelegt, die von einer automatischen Lenkung und/oder von einem Fahrer zum Verstellen des Lenkrads 63 aufgewendete Verstellkraft zu ermitteln und über das Sensorsignal 110 ausgegeben. Das Verstellen des Lenkrads 63 bewirkt eine Änderung der aktuellen Stellung der Räder. Der Sensor 108 ermittelt die zum Verstellen des mindestens einen Rades notwendige Verstellkraft und stellt diese über das Sensorsignal 112 bereit.

Die Vergleichseinrichtung 102 ist dazu ausgelegt, die mindestens eine Verstellkraft mit mindestens einem vorgegebenen Vergleichswert zu vergleichen und ein dem Vergleich entsprechendes Vergleichsignal 114 an eine Auswerteeinrichtung 116 auszugeben. Entspricht die Verstellkraft dem mindestens einen vorgegebenen Vergleichswert, liegt die Verstellkraft beispielsweise innerhalb eines Wertebereiches und/oder unterhalb eines vorgegebenen Schwellwerts, so stellt die Auswerteeinrichtung 116 fest, dass die vorgegebene Soll-Fahrtrichtungsgröße für das Fahrzeug einhaltbar ist. Ein entsprechendes Informationssignal 118 kann anschließend an mindestens eine fahrzeugeigene Einrichtung ausgegeben. Bevorzugterweise wird das Informationssignal 118 an das erste automatische Fahrzeugsteuersystem 52 ausgegeben. Das erste automatische Fahrzeugsystem 52 erhält somit eine Rückmeldung, dass die mindestens Soll-Fahrtrichtungsgröße (z.B. der bereitgestellten Einparkweg) für das Fahrzeug weiterhin einhaltbar ist.

Sofern die mindestens eine Verstellkraft jedoch um mindestens eine Mindestdifferenz von dem mindestens einem Vergleichswert abweicht, stellt die Auswerteeinrichtung 116 fest, dass die Ausführbarkeit der vorgegebenen Soll-Fahrtrichtungsgröße für das Fahrzeug nicht einem gewünschten Standard entspricht. Ein entsprechendes Informationssignal 118 kann daraufhin an das automatische Fahrzeugsteuersystem 52 ausgegeben werden.

Das erste automatische Fahrzeugsteuersystem 52 erfährt somit über das Informationssignal 118, dass der ursprüngliche maximale Lenkradwinkel und/oder der ursprüngliche maximale Radwinkel für das Fahrzeug nicht mehr verlässlich ausführbar sind. Vorzugsweise berechnet das erste automatische Fahrzeugsteuersystem 52 nach einem Empfang eines derartigen Informationssignals 118 lediglich Soll-Fahrtrichtungsgrößen (Einparkwege), deren Lenkradwinkel und/oder Radwinkel unter dem als ungeeignet nachgewiesenen Werten liegen.

In einer bevorzugten Ausführungsform ist die Auswerteeinrichtung 116 nach einem Feststellen, dass die Ausführbarkeit der vorgegebenen Soll-Fahrtrichtungsgröße für das Fahrzeug nicht einem gewünschten Standard entspricht, dazu ausgelegt, den ausführbaren maximalen Lenkradwinkel und/oder den ausführbaren maximalen Radwinkel neu zu bestimmen. Der mindestens eine neubestimmte Winkel kann anschließen über das Informationssignal 118 an das erste automatische Fahrzeugsteuersystem 52 ausgegeben werden. Der mindestens eine neubestimmte Winkel wird daraufhin bei der Ermittlung einer vorteilhaften Soll-Fahrtrichtungsgröße von dem ersten automatischen Fahrzeugsteuersystem 52 berücksichtigt.

Die Auswerteeinrichtung 116 kann auch dazu ausgelegt sein, eine Anzeige- oder Ansagevorrichtung des Fahrzeugs zum Anzeigen und/oder Ansagen einer Nachricht an den Fahrer zu aktivieren. Vorzugsweise erhält die Anzeigen und/oder Ansagen eine Information darüber, dass die Ausführbarkeit der vorgegebenen Soll-Fahrtrichtungsgröße für das Fahrzeug nicht einem gewünschten Standard entspricht. Der Fahrer hat nun die Möglichkeit, eine Werkstatt aufzusuchen.

Durch den Vergleich mehrerer Verstellkräfte mit mehreren Vergleichswerten kann insbesondere eine Ursache für die unbefriedigende Ausführbarkeit der vorgegebenen Soll-Fahrtrichtungsgröße ermittelt werden. Diese Ursache kann anschließend dem Fahrer mitgeteilt werden. Dies reduziert die Kosten für eine Reparatur.

In einer bevorzugten Ausführungsform weist die Vorrichtung 100 einen dritten Signaleingang 102c zum Empfangen des oben schon beschriebenen Datensignals 74 auf. Der mindestens eine Vergleichswert kann somit bezüglich einer Fahrzeugneigung und/oder eines Reibwerts der gerade befahrenen Straße geeignet gewählt werden.

## Patentansprüche

1. Vorrichtung (100) zum Überprüfen einer Ausführbarkeit einer vorgegebenen SollFahrtrichtungsgröße (α0) für ein Fahrzeug (90) mit
einem ersten Signaleingang (102a), welcher dazu ausgelegt ist, die von einem Fahrer und/oder von einem automatischen Fahrzeugsteuersystem vorgegebene Soll-Fahrtrichtungsgröße (α0) zu empfangen;
**gekennzeichnet durch**
einen zweiten Signaleingang (102b), welcher dazu ausgelegt ist, mindestens eine von mindestens einem Sensor (106,108) des Fahrzeugs (90) ermittelte Verstellkraft am Lenkstrang zum Verstellen des Lenkrads (63) und/oder eines Rads des Fahrzeugs (90) beim Ändern der aktuellen Fahrrichtung des Fahrzeugs (90) entsprechend der vorgegebenen Soll-Fahrtrichtungsgröße (α0) zu empfangen;
eine Vergleichseinrichtung (102), welche dazu ausgelegt ist, die ermittelte mindestens eine Verstellkraft am Lenkstrang mit mindestens einem vorgegebenen Vergleichswert zu vergleichen und ein dem Vergleich entsprechendes Vergleichsignal (114) bereitzustellen; und
eine Auswerteeinrichtung (116), welche nach einem Empfang des Vergleichsignals (114) dazu ausgelegt ist, sofern die mindestens eine Verstellkraft um mindestens eine Mindestdifferenz von dem mindestens einem Vergleichswert abweicht, festzustellen, dass die Ausführbarkeit der vorgegebenen Soll-Fahrtrichtungsgröße (α0) für das Fahrzeug (90) nicht einem gewünschten Standard entspricht und ein entsprechendes Informationssignal (118) bereitzustellen, wobei das Informationssignal (118) an eine Anzeige- oder Ansagevorrichtung des Fahrzeugs (90) zum Anzeigen und/oder Ansagen einer entsprechenden Nachricht an den Fahrer und/oder an das automatische Fahrzeugsteuersystem (52,54) ausgegeben wird.

2. Vorrichtung (100) nach Anspruch 1, wobei auf der Vorrichtung (100) mindestens ein Ausgangswert eines ausführbaren maximalen Lenkradwinkels und/oder eines ausführbaren maximalen Radwinkels des Fahrzeugs (90) hinterlegt ist, wobei die Auswerteeinrichtung (116) nach dem Empfang des Vergleichsignals (114) zusätzlich dazu ausgelegt ist, sofern die mindestens eine Verstellkraft um die mindestens eine Mindestdifferenz von dem mindestens einem Vergleichswert abweicht, den ausführbaren maximalen Lenkradwinkel und/oder den ausführbaren maximalen Radwinkel des Fahrzeugs (90) neu festzulegen, und wobei das an das automatische Fahrzeugsteuersystem (52,54) ausgegebene Informationssignal eine Information über den neu festgelegten ausführbaren maximalen Lenkradwinkel und/oder den neu festgelegten ausführbaren maximalen Radwinkel umfasst.

3. Vorrichtung (100) nach Anspruch 1 oder 2, wobei die Vorrichtung (100) zusätzlich dazu ausgelegt ist, über ein Vergleichen mehrerer Verstellkräfte mit mehreren Vergleichswerten die möglichen Ursachen für das Abweichen der mindestens eine Verstellkraft um die mindestens eine Mindestdifferenz von dem mindestens einen Vergleichswert einzugrenzen.

4. Vorrichtung (100) nach einem der Ansprüche 1 bis 3 mit einem dritten Signaleingang (102c), welcher dazu ausgelegt ist, eine von einem weiteren fahrzeugeigenen Sensor ermittelte Fahrzeugneigung und/oder einen von einem weiteren fahrzeugeigenen Sensor ermittelten Reibwert einer befahrenen Straße zu empfangen, wobei die Vergleichseinrichtung (102) dazu ausgelegt ist, mindestens einen der Fahrzeugneigung und/oder dem Reibwert der befahrenen Straße entsprechenden Vergleichswert aus einer vorgegebenen Menge von Vergleichswerten zu ermitteln.

5. Verfahren zum Überprüfen einer Ausführbarkeit einer vorgegebenen Soll-Fahrtrichtungsgröße (α0) für ein Fahrzeug (90) mit den Schritten:
Empfangen der von einem Fahrer und/oder von einem automatischen Fahrzeugsteuersystem vorgegebenen Soll-Fahrtrichtungsgröße (α0) (S40);
Ändern der aktuellen Fahrrichtung des Fahrzeugs (90) entsprechend der vorgegebenen Soll-Fahrtrichtungsgröße (α0) (S42);
**gekennzeichnet durch** die folgenden Schritte:
Ermitteln mindestens einer bei dem Ändern der aktuellen Fahrrichtung zum Verstellen des Lenkrads (63) und/oder eines Rads des Fahrzeugs (90) aufgebrachten Verstellkraft am Lenkstrang (S44);
Vergleichen der mindestens einen ermittelten Verstellkraft mit mindestens einem vorgegebenen Vergleichswert (S46);
sofern die mindestens eine Verstellkraft um mindestens eine Mindestdifferenz von dem mindestens einen Vergleichswert abweicht, Feststellen, dass die Ausführbarkeit der vorgegebene Soll-Fahrtrichtungsgröße (α0) für das Fahrzeug (90) nicht einem gewünschten Standard entspricht (S52); und
Anzeigen und/oder Ansagen einer entsprechenden Nachricht an den Fahrer (S56) und/oder Ausgeben eines entsprechenden Informationssignals (118) an das automatische Fahrzeugsteuersystem (52,54) (S54).

## Claims

1. Device (100) for checking an ability to implement a pre-determined target travel direction parameter (α0) for a vehicle (90), having
a first signal input (102a) which is configured to receive the target travel direction parameter (α0) which is pre-determined by a driver and/or by an automatic vehicle control system;
**characterized by**
a second signal input (102b) which is configured to receive at least one adjustment force, determined by at least one sensor (106, 108) of the vehicle (90), on the steering line for adjusting the steering wheel (63) and/or a wheel of the vehicle (90) when the current direction of travel of the vehicle (90) changes, in accordance with the pre-determined target travel direction parameter (α0);
a comparator device (102) which is configured to compare the determined at least one adjustment force at the steering line with at least one pre-determined comparison value and to make available a comparison signal (114) which corresponds to the comparison; and
an evaluation device (116) which, after reception of the comparison signal (114), is configured to determine, in so far as the at least one adjustment force differs from the at least one comparison value by at least a minimum difference, that the ability to implement the pre-determined target travel direction parameter (α0) for the vehicle (90) does not correspond to a desired standard, and to make available a corresponding information signal (118), wherein the information signal (118) is output to a display or announcement device of the vehicle (90) for displaying and/or announcing a corresponding message to the driver and/or to the automatic vehicle control system (52, 54).

2. Device (100) according to Claim 1, wherein at least one output value of a maximum steering wheel angle which can be implemented and/or of a maximum wheel angle of the vehicle (90) which can be implemented are/is stored on the device (100), wherein the evaluation device (116) is additionally configured, after the reception of the comparison signal (114), to newly define the maximum steering wheel angle which can be implemented and/or the maximum wheel angle of the vehicle which can be implemented in so far as the at least one adjustment force differs from the at least one comparison value by the at least one minimum difference, and wherein the information signal which is output to the automatic vehicle control system (52, 54) comprises information about the newly defined maximum steering wheel angle which can be implemented and/or the newly defined maximum wheel angle which can be implemented.

3. Device (100) according to Claim 1 or 2, wherein the device (100) is additionally configured to narrow down the possible causes for the fact that the at least one adjustment force differs from the at least one comparison value by the at least one minimum difference by comparing a plurality of adjustment forces with a plurality of comparison values.

4. Device (100) according to one of Claims 1 to 3 having a third signal input (102c) which is configured to receive a vehicle inclination, determined by a further vehicle-mounted sensor and/or a coefficient of friction, determined by a further vehicle-mounted sensor, of a road being travelled on, wherein the comparison device (102) is configured to determine at least one comparison value, corresponding to the vehicle inclination and/or the coefficient of friction of the road being travelled on, from a predefined set of comparison values.

## Revendications

1. Dispositif (100) de vérification de la possibilité d'exécution d'une grandeur prédéterminée de direction de consigne de roulage (α0) pour un véhicule (90), le dispositif présentant
une première entrée (102a) de signaux conçue pour recevoir une grandeur prédéterminée de consigne de direction de roulage (α0) d'un conducteur et/ou d'un système automatique de commande du véhicule, **caractérisé par**
une deuxième entrée (102b) de signaux conçue pour recevoir au moins une force d'ajustement, déterminée par au moins un capteur (106, 108) du véhicule (90), appliquée sur le train de direction pour déplacer le volant (63) et/ou une roue du véhicule (90) lors d'une modification de la direction de roulage en cours du véhicule (90) en correspondance à la grandeur prédéterminée de consigne de direction de roulage (α0),
un dispositif comparateur (102) conçu pour comparer la ou les forces d'ajustement déterminées pour agir sur le train de direction à au moins une valeur comparative prédéterminée et pour délivrer un signal de comparaison (114) qui correspond à la comparaison et
un dispositif d'évaluation (116) qui, après réception du signal comparatif (114), est conçu pour définir que la possibilité d'exécution de la grandeur prédéterminée de consigne de direction de roulage (α0) du véhicule (90) ne correspond pas à une norme souhaitée au cas où la ou les forces d'ajustement s'écartent de la ou des valeurs comparatives d'au moins une différence minimale et pour délivrer un signal d'information (118) approprié, le signal d'information (118) étant délivré sur un dispositif d'affichage ou un dispositif vocal du véhicule (90) pour afficher et/ou délivrer un message approprié au conducteur et/ou au système automatique (52, 54) de commande du véhicule.

2. Dispositif (100) selon la revendication 1, dans lequel au moins une valeur de sortie d'un angle maximum admissible de volant et/ou d'un angle maximum admissible de la roue du véhicule (90) est conservée dans le dispositif (100), le dispositif d'évaluation (116) étant de plus conçu pour définir à nouveau l'angle maximum admissible de volant et/ou l'angle maximum admissible de roue du véhicule (90) après réception du signal comparatif (114) et au cas où la ou les forces d'ajustement s'écartent de la ou des différences minimales de la ou des valeurs comparatives, le signal d'information délivré au système automatique (52, 54) de commande du véhicule comprenant une information concernant l'angle de volant maximum admissible nouvellement défini et/ou l'angle maximum admissible de roue nouvellement défini.

3. Dispositif (100) selon les revendications 1 ou 2, le dispositif (100) étant de plus conçu pour, par l'intermédiaire d'une comparaison de plusieurs forces d'ajustement à plusieurs valeurs comparatives, délimiter les causes possibles de l'écart entre la ou les forces d'ajustement et la ou les valeurs comparatives de la ou des différences minimales.

4. Dispositif (100) selon l'une des revendications 1 à 3, présentant une troisième entrée (102c) de signaux conçue pour recevoir l'inclinaison du véhicule déterminée par un autre capteur propre au véhicule et/ou la valeur du frottement de la chaussée parcourue, déterminée par un autre capteur propre au véhicule, le dispositif de comparaison (102) étant conçu pour déterminer à partir d'une quantité prédéterminée de valeurs comparatives au moins une valeur comparative qui correspond à l'inclinaison du véhicule et/ou à la valeur du frottement de la chaussée parcourue.
